# EUROPEAN PATENT APPLICATION

(11) **EP 4 344 008 A1**
(43) Date of publication of application: **27.03.2024**
(21) Application number: 23194313.5
(22) Date of filing: 30.08.2023
(51) Int. Cl.: H02J 3/14, H02J 3/16, H02J 3/18, H02J 3/32, B60L 55/00, B60L 53/20, B60L 53/65, B60L 53/66, H02J 13/00

(54) **GRID INTERFACE SYSTEM AND DEVICE**

(30) Priority: 30.08.2022 US 202263402184 P
(71) Applicant: Solaredge Technologies Ltd., Herzeliya 4673335 (IL)
(72) Inventor: HORN, Julie, 4673335 Herzeliya (IL); KAGAN, Einav, 4673335 Herzeliya (IL)
(74) Representative: V.O.

(57) **Abstract**

A grid interface device (102) may be coupled between power source terminals (120) and grid terminals (121). The grid interface device (102) may be configured to continuously monitor power provided by the power source (101) and selectively connect the power source (101) to the grid (103) and enable power provision to the grid (103) if the power provided is in compliance with grid requirements. The grid interface device (102) may command the power source (101) to adjust a characteristic of the power output in order to comply with grid requirements, and in some cases may take independent corrective action in order to provide grid-compliant power.

## Description

### CROSS-REFERENCE TO RELATED APPLICATIONS

The present application claims priority to U.S. provisional patent application serial no. 63/402,184, filed August 30, 2022, entitled "Grid Interface System and Device," hereby incorporated by reference as to its entirety.

### BACKGROUND

The present disclosure relates to providing power to electric power grids. More specifically, power sources, such as power generators, batteries or other energy storage devices, or electrical vehicles having batteries, may include a power converter configured to provide power by outputting a waveform that may or may not be generally suitable for an electric power grid. In such devices, one or more specific parameters of the output waveform may or may not comply with local electric power grid requirements, which may be numerous, nuanced, and ever-changing. As a result, such power sources might be prohibited from providing power to the grid, and may be limited to only drawing power from the grid.

### SUMMARY

The following presents a simplified summary of various concepts disclosed herein. This summary is not an extensive overview and is not intended to identify key or critical elements or to delineate the scope of the claims. This summary is not intended to limit or constrain the present disclosure.

Systems, methods, apparatuses, and computer-executable instructions (for example, software and/or firmware) are described that may enable a power source to provide power to a power grid in accordance with one or more grid regulations by coupling a device, referred to herein as a grid interface device (GID) between the grid and the power source. Without the GID, the power source may or may not be normally configured to independently comply with the one or more grid regulations.

The systems and apparatuses may include, and the methods and computer-executable instructions may relate to, a grid interface device (GID) electrically coupled between a power grid and a power source (PS) that is configured to output power in a form generally conforming to the power grid form. For example, the power source may be an electric vehicle (EV) including an onboard charger (OBC) configured to output alternating current (AC) power at a particular frequency, such as 50Hz or 60Hz (depending on location) or any other frequency, and at a particular voltage amplitude, such as around 230V root-mean-square (RMS) or around 240V (RMS), or around 208V RMS, another common power grid voltage, or any other voltage amplitude. The power source may also include one or more other types of direct current (DC) sources (e.g., batteries, fuel cells, photovoltaic generators, flywheels, generators, and the like) coupled to direct current to alternating current (DC/AC) power converters configured to output AC power. The power source may include generators or wind turbines outputting AC power, and the like.

A GID in accordance with the disclosure herein may be configured to monitor power output by PS that is electrically coupled to the GID, to ensure that the power output by the PS complies with one or more specific grid requirements of a grid that the GID may be electrically coupled to. The one or more specific grid requirements may include one or more grid requirements other than general (e.g. voltage amplitude, phase, and frequency) parameters. For example, some grids may require compliance with one or more specific Total Harmonic Distortion (THD) requirements (e.g., THD may not exceed a threshold amount of THD such as 5%, or 3%, or 1%, where the threshold amount of THD may depend on a power level being supplied by the PS), reactive power injection requirements, electromagnetic compatibility (EMC) requirements, maximum power export requirements, and the like. While many grids share general parameters such as voltage amplitude, phase, and frequency, specific requirements may vary from grid to grid, and some PSs (e.g., EVs having onboard chargers) might not be configured to comply with specific requirements of all grids that the PS may be expected to be connected to.

A GID in accordance with the disclosure herein may be configured to signal a PS that is electrically coupled to the GID to take action (e.g., to reduce THD, reduce electromagnetic interference (EMI) levels, increase reactive power, and/or decrease supplied current) to meet one or more requirements of a particular grid that the GID may be electrically coupled with. The GID may be configured to independently take corrective action in certain cases where the GID is able to correct the PS output such that it complies with one or more grid requirements.

The GID may be configured to determine, based on the power being supplied by the PS and/or based on analog and/or digital communications with the PS, whether or not the PS is in compliance with one or more grid requirements. The GID may be configured to disconnect the PS from the grid in case of noncompliance of the PS and a determination by the DIG that the PS will not correct the output to be in compliance (for example, due to an inability to make the correction). In some cases of noncompliance, the GID may be configured to enable one-way charging of the PS (e.g., if the power supply is a battery) from the grid and prohibit the PS from providing power to the grid. The PS may be in compliance or noncompliance with the one or more grid requirements on only a temporary basis, or permanently. Where the PS is non-compliant with the one or more grid requirements on a temporary basis, the GID may treat the PS as a non-compliant PS during that non-compliant period, and as a compliant PS while the PS is determined to be compliant with the one or more grid requirements. In some cases of noncompliance, the GID may be configured to enable to PS to provide power to a local load (e.g., a load that is local to the GID without an intervening public utility grid). The local load may include, for example, a local energy storage device such as a battery or a flywheel. The local load may additionally or alternatively include one or more local devices that consume power, such as a lighting circuit or an air conditioner. According to one or more features of the disclosure, the GID may comprise a power converter configured to convert power from the PS or from another source such as a local energy storage device to the grid, according to grid requirements.

These and other features will be described in further detail below in the Detailed Description section of this disclosure.

### BRIEF DESCRIPTION OF THE DRAWINGS

The present disclosure is illustrated by way of example and is not limited in the accompanying figures, in which like reference numerals indicate similar elements and in which:
Fig. 1 shows an example power system including a grid interface device in accordance with one or more aspects of the disclosure herein.
Fig. 2A shows an example power system including a grid interface device in accordance with one or more aspects of the disclosure herein.
Fig. 2B shows an example power system including a grid interface device in accordance with one or more aspects of the disclosure herein.
Fig. 3 illustrates an example method for operating a grid interface device in accordance with one or more aspects of the disclosure herein.
Figs. 4A-4D illustrate example methods for operating a grid interface device in accordance with one or more aspects of the disclosure herein.
Figs. 5A-5B illustrate example methods for operating a power source coupled to a grid interface device in accordance with one or more aspects of the disclosure herein.
Fig. 6 illustrates an example method for operating a grid interface device in accordance with one or more aspects of the disclosure herein.
Fig. 7A illustrates an example grid interface device and a power source as part of a system in accordance with one or more features of the disclosure herein.
Fig. 7B illustrates features of the system of Fig. 7A according to one or more aspects of the disclosure herein.

### DETAILED DESCRIPTION

In the following description, reference is made to the accompanying drawings, which form a part hereof, and in which are shown, by way of illustration, various examples of the disclosure. It is to be understood that the examples shown and/or described are non-exclusive, other examples may be practiced, and structural and functional modifications may be made, without departing from the scope of the present disclosure.

The present disclosure includes devices, systems, methods, and computer-executable instructions that may be involved with connecting a power source (PS) to an electrical grid via a grid interface device (GID) and selectively enabling power provision from the PS to the grid in accordance with one or more grid requirements.

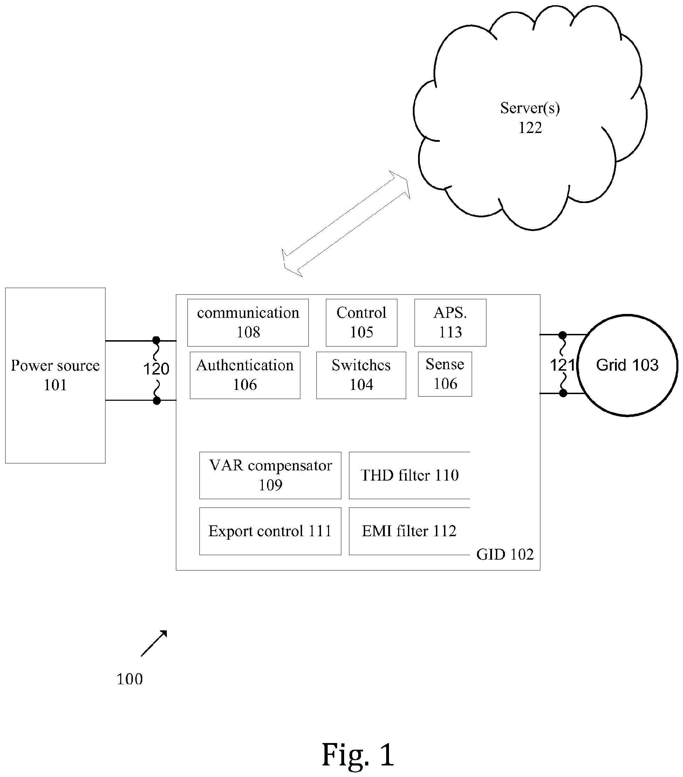

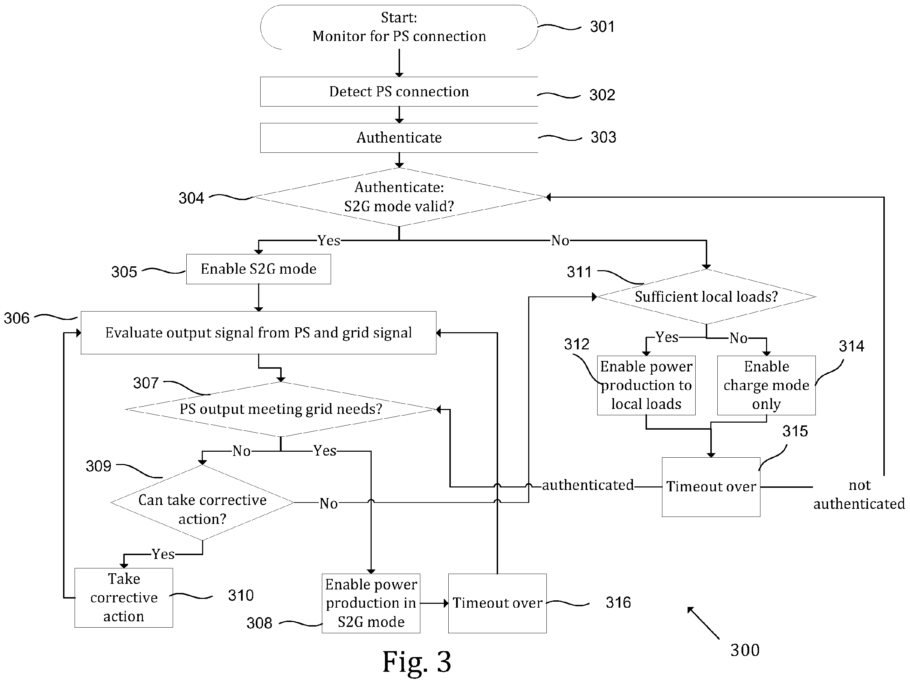

One or more aspects may be embodied in computer-usable data and computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium, which may comprise a non-transitory computer readable medium such as one or more hard disks, optical disks, removable storage media, solid state memory chips, random access memory (RAM) chips, read-only memory (ROM) chips, flash memory chips, etc. Moreover, a computing device (such as a computing device of the GID or of the PS) may read the instructions stored in the computer-readable medium, and one or more processors of the computing device may execute the instructions to thereby cause the computing device to perform one or more actions. As will be appreciated by one of skill in the art, the functionality of the program modules may be combined or distributed (e.g., broken into further smaller modules) as desired. In addition, the functionality may be embodied in whole or in part in firmware and/or hardware equivalents such as integrated circuits, field programmable gate arrays (FPGAs), or the like. Particular data structures may be used to more effectively implement one or more aspects of the disclosure, and such data structures may be within the scope of computer executable instructions and computer-usable data described herein. For example, the controller 105 illustrated in Fig. 1 and the methods illustrated in Figs. 3, 4A-4D, 5A, 5B and 6 may be implemented with hardware, firmware, software, and/or other computer implemented instructions.

Although the subject matter has been described in language specific to structural features and/or methodological acts, it is to be understood that the subject matter defined in the appended claims is not necessarily limited to the specific features or acts described herein. Rather, various specific features and acts described herein are disclosed as example forms of implementing the claims.

Reference is now made to Fig. 1, which illustrates an example power system 100 in accordance with one or more aspects of the disclosure herein. Power system 100 may include a power source 101. Power source (PS) 101 may be, for example, an electric vehicle having a chargeable and dischargeable battery or other energy storage devices. For example, PS 101 may comprise one or more photovoltaic (PV) generators, for example, one or more PV cells, modules, panels, shingles, roof tiles, building-integrated PV modules, etc. PS 101 may include a vehicle carrying one or more PV generators or wind turbines configured to generate power. PS 101 may be stationary or mobile, and may output direct current (DC) power and/or alternating current (AC) power. The examples discussed in the disclosure herein will primarily focus on an AC power source providing power to an AC grid, but aspects and features of the disclosure herein may equally apply to a DC power source providing power to a DC grid (in this case, the specific grid requirements may be different. For example, a DC grid might have electromagnetic (EMI) requirements and a maximum harmonic distortion requirement but might not have reactive power compensation requirements). PS 101 may include a DC power source and a bidirectional DC/AC converter (e.g., if PS 101 is an electrical vehicle, PS 101 may include an onboard charger which includes a bidirectional DC/AC converter).

Power source 101 may be coupled to a device 102 that will be referred to herein as a grid interface device (GID). GID 102 may be physically and/or electrically attached to earth in a fixed manner. For example, GID 102 may be part of an EV charging station that is generally immobile. GID 102 may include electronics housed in an enclosure that is designed to protect the electronics from moisture, dirt and the like. GID may include an enclosure separate from an enclosure of PS 101. GID 102 may include a plurality of first terminals 120 configured for coupling to power source 101, a plurality of second terminals configured for coupling to grid 103, and one or more switches 104 configured to form a connection or disconnection between one or more of first terminals 120 and one or more of second terminals 121. Switches 104 may include one more transistors, electromechanical relays or other types of galvanically isolating or non-isolating switches that form one or more electrical connections between one or more of the first terminals 120 and one or more of the second terminals 121 when in an ON state (e.g., ON position) and electrically disconnect one or more of the first terminals 120 from one or more of the second terminals 121 when in an OFF state (e.g., OFF position). GID 102 may include communication device 108 configured to communicate with a communication device included in PS 101. Communication device 108 may be configured to communicate with PS 101 via wire or wirelessly. For example, communication device 108 may transmit and/or receive communication signals over power lines connecting PS 101 to GID 102 (in addition to power being transmitted over the power lines) or may transmit and/or receive communication signals over a dedicated communication wires separate from the power lines. According to some features of the disclosure herein, a multiwire cable may connect GID 102 to PS 101, with some wires providing a power connection for transferring the power and one or more other wires providing a communication link for transferring the communication signals. Communication device 108 may include one or more wireless communication modems such as WiFi, Bluetooth, cellular communication and/or include an internet connection. Communication device 108 may be configured to communicate with one or more remote server(s) 122 or other computing devices for receiving updates and/or information pertaining to, for example, grid 103 operating parameters and/or requirements and/or characteristics of PS 101 or any other power sources that may be expected to be connected to GID 102. The grid 103 may be any type of electrical power grid, such as a public utility grid or a private electrical distribution grid. The grid 103 may be configured to distribute electrical power to multiple buildings, households, campuses, geographical locations, neighborhoods, towns, districts, cities, counties, and/or states.

GID 102 may include one or more sensor(s) and/or sensor interface(s) 106. Sensor(s)/sensor interface(s) 106 may include one or more sensors such as one or more voltage sensors, current sensors, and/or EMI sensors, and may be configured to monitor one or more parameters of power (e.g. current, voltage, radiation, temperature, and the like) at first terminals 120, second terminals 121, and/or at one or more internal measuring points within GID 102 (such as at a measuring point electrically between terminals 120 and terminals 121). Sensor(s)/sensor interface(s) 106 may provide measurements of these parameters to controller 105. Controller 105 may include one or more digital and/or analog controllers such as digital signal processors (DSPs), other processors, microcontroller units (MCUs), field programmable gate arrays (FPGAs), and/or various analog and/or digital control circuits. Controller 105 may be, or may be part of, a computing device having one or more processors that may execute computer-executed instructions stored in memory (such as memory of controller 105. When the instructions are executed by the one or more processors, this may cause GID 102 to perform any of the various functions and actions described herein that are attributed to GID 102. Controller 105 may, based on measurements received from sensor(s)/sensor interface(s) 106, determine, by reading and carrying out computer-executable instructions stored in a computer-readable medium such as memory (e.g., which may be part of controller 105 or connected to controller 105) and based on the measured parameters (e.g. by comparing the measured parameters with one or more threshold parameters, hold time parameters, and the like) saved in memory, determine whether a power signal present at first terminals 120 (or second terminals 121, or any other measuring point) is in compliance with grid requirements for connecting to grid 103. Based on the determination, controller 105 may selectively operate one or more switches 104 (e.g., by providing a control signal to circuitry controlling opening and closing of switches 104) to form an one or more electrical connections, or disconnect one or more electrical connections, between grid 103 and PS 101.

GID 102 may include authentication module 106 configured to determine an identity of a PS 101 coupled to first terminals 120. Authentication module 106 may be part of or separate from controller 105. Authentication module may attempt to (e.g., via communication device 108) obtain, from PS 101, identifying information such as an identification (ID) number (or one or more other characteristics such as an indication of one or more power capabilities of the PS) associated with PS 101 (e.g., which may uniquely identify PS 101 from other PSs) and compare the identifying information to a list or lookup table of recognized PSs, and/or may query server 122 with the identifying information to determine an identity of PS 101. The identifying information may be indexed in the list or lookup table to one or more characteristics of PS 101. Where a query is sent to server 122, the query may return the one or more characteristics of PS 101. The one or more characteristics of PS 101 may be used by authentication module 106 and/or by controller 105 to determine whether PS 101 is suitable for meeting requirements of grid 103. If PS 101 is determined to be a device suitable for meeting requirements of grid 103, then GID 102 may consider enabling PS 101 to operate in a discharge mode in a manner that provides power to grid 103 via GID 102. In some cases, PS 101 may be authenticated as a device suitable for providing power to one or more local load (for example, one or more storage devices) but not to grid 103. In some cases, PS 101 may be authenticated as a device suitable for receiving power from grid 103 and/or one or more local storage devices, but not for providing power to grid 103 or local loads. In some cases, PS 101 may be authenticated as a device not suitable for being party to power-exchange in either direction with any other component of system 100, and in such cases controller 105 may operate switches 104 to prohibit direct electrical connection of power with other system components such as with PS 101 (although in such cases, communications between PS 101 and GID 102 may or may not still be retained without the ability to transfer power in either direction between PS 101 and GID 102).

According to one or more features of the disclosure herein, GID 102 may comprise one or more grid compliance corrective devices (GCCDs). For example, GID 102 may include VAR compensator 109 configured to cause a reactive load coupled to grid 103 increase or decrease, based on a measured reactive power of PS 101 in comparison with one or more requirements of grid 103. VAR compensator 109 may include, for example, one or more switched capacitors and/or inductors configured to be selectively coupled to and decoupled from one or more of first terminals 120 and/or one or more of second terminals 121 in order to adjust a reactive power between PS 101 and grid 103 (e.g., at terminals 120 and/or terminals 121) in a manner that will comply with grid 103 requirements. GID 102 may include total harmonic distortion (THD) filter 110 configured to reduce a THD value of current flowing through terminals 120 and/or 121. For example, THD filter 110 may include one or more switched current filters comprising one or more capacitors and/or inductors configured to be switched between terminals 120 and/or 121 to reduce a magnitude of one or more certain current frequencies. GID 102 may include electromagnetic interference (EMI) filter 110 configured to reduce EMI conducted or irradiated by PS 101. For example, EMI filter 110 may include one or more ferrite beads disposed around or on conductors that can be permanently or switch-ably connected between terminals 120 and 121. The conductors may be straight conductors and/or twisted/braided/winded conductors, which may also reduce EMI.

According to one or more features of the disclosure herein, GID 102 may comprise export control device 111. Export control device 111 may form a load or a load interface for reducing or increasing an amount of power provided to grid 103, for example to provide as much power as possible to grid 103 while ensuring that an amount of power provided to grid 103 does not exceed what is allowed. For example, some grid controllers limit an amount of power that may be provided to the grid at certain hours, and/or may require "net-zero" power export (e.g., over the course of an hour, or a day, or a month, GID 102 may not enable export of power to the grid in excess of what is drawn from the grid by devices coupled to GID 102). In some cases, export control device 111 may be implemented using instructions or other control signals implemented by controller 105.

GID 102 may comprise auxiliary power supply (APS) 113. APS 113 may include a power converter configured to receive power from grid 103 at terminals 121 and convert the power from grid 103 to output power to a form suitable for power other components of GID 102 (e.g. controller 105, communication device 108, authentication module 106, driver circuits for switches 104, and/or any other component of GID 102 that may require a supply of power for proper operation).

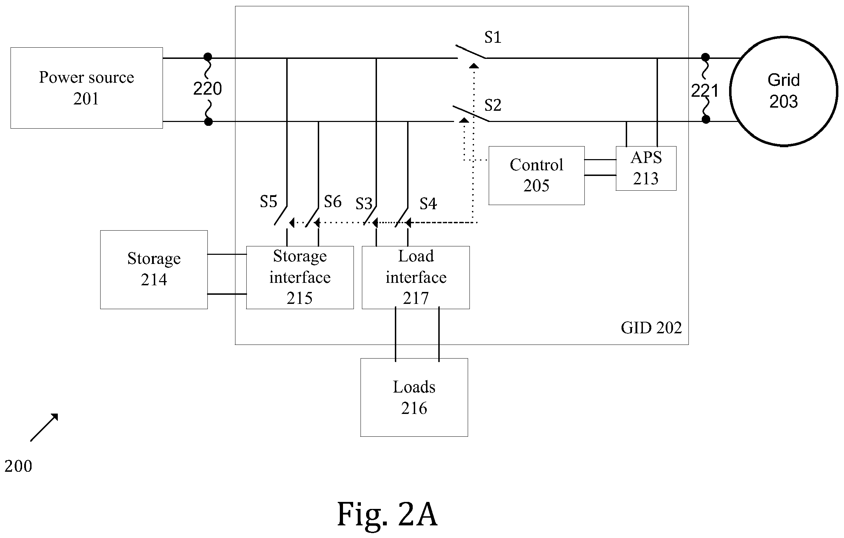

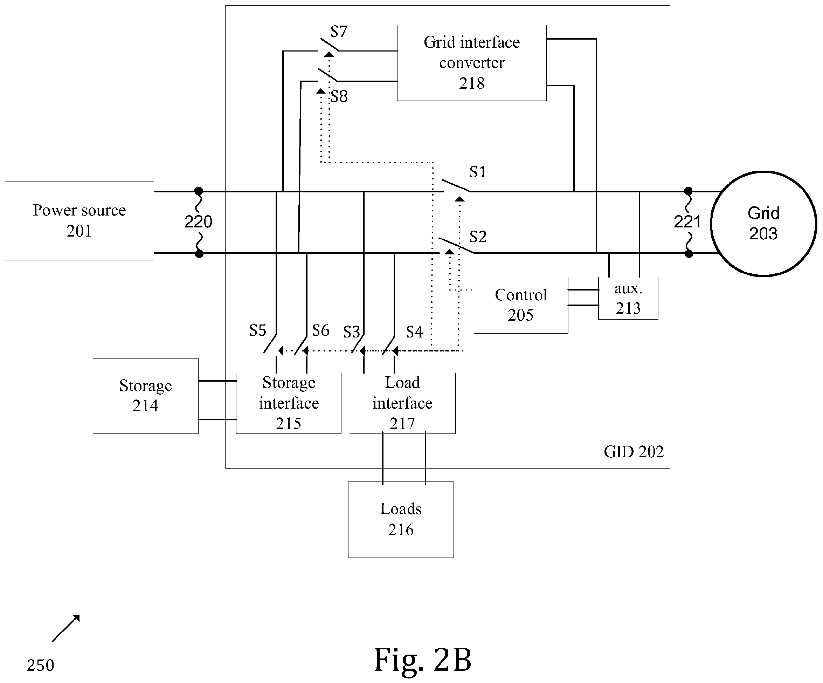

Reference is now made to Fig. 2A, which shows an example grid interface device 202 as part of a system 200 in accordance with one or more features of the disclosure herein. PS 201 and grid 203 may be similar to or the same as PS 101 and grid 103 as disclosed in Fig. 1. GID 202 may be similar to or the same as GID 102, with additional components and features explicitly shown in Fig. 2. Thus, Fig. 2A may show additional details of Fig. 1, where, for example, GID 202 may be the same as GID 102, PS 201 may be the same as PS 101, grid 203 may be the same as grid 103, terminals 220 may be the same as terminals 120, terminals 221 may be the same as terminals 121, and system 200 may be the same as system 100. Moreover, GID 202 may include any of the elements of GID 102 even if such elements are not explicitly shown in Fig. 2A, and GID 102 may include any of the elements of GID 202 even if they are not explicitly shown in Fig. 1. GID 202 may include switches S1 and S2 disposed between power source 201 and grid 203 and controlled by controller 205 (which is similar to or the same as controller 105 of Fig. 1, and powered by APS 213 which is similar to or the same as APS 113). When controller 205 sets S1 and S2 to the ON state, a connection is formed between PS 201 and grid 203. When S1 and S2 are in the OFF state, no connection is formed between PS 201 and grid 203. Switches S3 and S4 may form part of switches 104 of Fig. 1.

Switches S3 and S4 may be coupled between terminals 220 and load interface 215. Load interface 217 may be configured for coupling to one or more local loads 216. In some cases, load interface 217 may include one or more controllers, sensors and communication devices. In some cases, load interface 217 may include switches for connecting and disconnecting individual loads. When switches S3 and S4 are in the ON position, power from PS 201 and/or storage device 214 and/or grid 203 may be provided to one or more loads 216. In some cases, switches S3 and S4 may form part of switches 104 of Fig. 1. In some cases, switches S3 and S4 may be part of load interface 217, or may be connected between load interface 217 and loads 216 instead of between terminals 220 and load interface 217.

Storage device 214 may include one or more energy storage devices such as batteries, fuel cells, flywheels and the like. Storage interface 215 may include a power converter configured to convert power from storage device 214 to power at terminals 220 or power from terminals 220 to storage device 214. For example, if terminals 220 are configured to be AC power terminals and storage device 214 is a DC storage device, storage interface 215 may include a bidirectional DC/AC converter. For example, if terminals 220 are configured to be DC power terminals and storage device 214 is a DC storage device, storage interface 215 may include a bidirectional DC/DC converter. For example, if terminals 220 are configured to be AC power terminals and storage device 214 is an AC storage device, storage interface 215 may include a bidirectional AC/AC converter. For example, if terminals 220 are configured to be DC power terminals and storage device 214 is an AC storage device, storage interface 215 may include a bidirectional AC/DC converter. Storage interface 215 may further comprise one or more sensors, controllers, communication devices and the like. Switches S5 and S6 may be selectively controlled by controller 205 to selectively connect and disconnect storage interface 215 to and from terminals 220 and/or terminals 221. In some cases, switches S5 and S6 may form part of switches 104 of Fig. 1. In some cases, switches S5 and S6 may be part of storage interface 215, or may be connected between storage interface 215 and storage device 214 instead of between terminals 220 and storage interface 215.

Reference is now made to Fig. 2B, which illustrates GID 202 as part of system 250 according to additional features of the disclosure herein. In some cases, system 250 may be similar to or the same as system 200. In some cases. GID 202 may include a grid interface converter 218 coupled via switches S7 and S8 (which may be part of switches 104) between terminals 220 and 221. In some cases, instead of switches S7 and S8 separate from grid interface converter 218, one or more switches within grid interface converter 218 may be used to disconnect terminals 221 from terminals 220 if a disconnection is determined to be made. In some cases, for example, if grid interface converter 218 comprises one or more non-galvanically-isolating transistor switches and selective galvanic isolation is desirable between terminals 220 and 221, switches S7 and S8 may be included and may comprise electromechanical relays.

Grid interface converter 218 may be configured to convert power from terminals 220 in a manner that complies with grid 203 requirements. In some cases, responsive to a determination that PS 201 is not providing power in compliance with grid requirements, switches S1 and S2 may be OFF (thereby disconnecting terminals 220 from terminals 221) and grid interface converter 218 may be configured to convert power from terminals 220 (provided by PS 201, or by storage interface 215 when storage interface 215 and storage 214 are present) to terminals 221 in accordance with grid 203 requirements. If PS 201 is capable of (e.g., configured for) providing power in compliance with grid 203 requirements, switches S1 and S2 may be ON (thereby connecting terminals 220 with terminals 221), enabling direct provision of power from PS 201 to grid 203, and switches S7 and S8 may be OFF (or grid interface converter 218 may be caused not to operate) to reduce the number of conversion stages and potentially increase efficiency. Grid interface converter 218 may be present in implementation of GID 202 either with or without storage interface 215 and/or load interface 217.

Reference is now made to Fig. 3, which shows an example method 300 for operating a GID (e.g. GID 102 and/or GID 202) in accordance with features of the disclosure herein. Any or all steps of method 300 may be carried out by one or more digital and/or analog controller(s) configured to operate one or more components of a GID, such as controller 105 or controller 205. For simplicity, in the disclosure that follows, method 300 will be described as implemented by a single controller, without limiting the disclosure herein.

At step 301, the controller monitors (e.g. by polling, measuring impedance or by waiting for a signal) for a connection to a power source (e.g., at terminals 120 or 220). At step 302, the controller may detect (e.g., by receiving a communication signal at communication device 108, or by sensing a voltage or current at terminals 120 or 220) that a PS (such as PS 101 or 201) has connected to terminals 120 or 220 (e.g., by insertion of a plug including terminals 210 or 220 into an electrical vehicle charge/discharge outlet). At step 303, the controller (or, in some cases, a separate authentication module such as authentication module 106) attempts to authenticate an identity of the connected PS. For example, the controller may request identifying information, such as an ID number of the PS, and compare the identifying information received from the PS to a look-up table or list of ID numbers stored in memory (such as memory of controller 105 or 205), or query a server holding a list of ID numbers. At step 304, the controller may determine whether or not the PS is recognized as capable of (e.g., configured for) operating in a source-to-grid (S2G) mode of operation. If the PS is an electrical vehicle, S2G mode may be referred to as 'vehicle to grid' (V2G) mode. If no response is received at step 303 or the identifying information is unrecognized, or if the identifying information is recognized as being a non-compliant device, the controller may determine that the PS is not recognized as capable of operating in a source-to-grid (S2G) mode of operation.

If the controller determines that the PS is not recognized as capable of operating in a source-to-grid (S2G) mode of operation, the controller may proceed to step 311 and determine if a load interface (e.g. load interface 217) exists and if one or more sufficient loads (e.g. loads 216) are present and capable of (e.g., configured for) receiving power from the connected PS. If sufficient loads are present, the controller may proceed to step 312 and enable (e.g., by turning switches S3 and S4 ON) provision of power to local loads without enabling power provision to a grid such as grid 103 or 203 (e.g., by turning switches S1 and S2 OFF). If sufficient loads are not present, the controller may prohibit discharge of the PS to the grid and/or to local loads. However, the controller may proceed to step 314 and enable a charge mode of the PS (e.g., by turning switches S1 and S2 ON but restricting current flow to only charge the PS from the grid and/or storage 214 and not discharge the PS to the grid. For example, if sensor(s)/sensor interface(s) provide measurements indicating that the current being provided from the PS to the loads is discharging the PS at a rate that is higher than desired (e.g., higher than a threshold rate of discharge), the controller may then turn switches S1 and S2 OFF). Step 314 may include the controller sending a command to the PS to only operate in a charging mode, or to shut down.

After step 314 or step 312, the controller may, after determining in step 315 that a period of time (e.g. a predetermined period of time such as one or more seconds, one or more minutes, or one or more tens of minutes) has elapsed to loop back to step 304 attempt to re-authenticate the PS. In some cases, a communication failure (e.g., caused by noise or communication network outage) may cause authentication to fail at step 304, but subsequent attempts to authenticate may be successful. In some cases, authentication at step 304 may only be considered to be failed after several attempts are made (e.g., a predetermined number of attempts are made) and all fail (this loop of repeated attempts to authenticate is not illustrated explicitly, for visual simplicity).

If, at step 304, authentication succeeds and the PS is recognized as being capable of providing power according to grid requirements, the controller may proceed to step 305 and enable a source to grid (S2G) mode of operation. For example, the controller may command the PS to provide a power output according to one or more grid requirements. The controller may store the one or more grid requirements in memory. At step 306, the controller may evaluate (e.g., by obtaining measurements via sensor(s)/sensor interface(s) 106 and analyzing the measurements by controller 105 to calculate THD, EMI, and/or reactive power, etc.) the output power and evaluate the grid operating point (e.g. voltage amplitude, current amplitude, voltage phase, current phase, voltage frequency and/or current frequency) to ensure compliance. If, at step 307, the controller determines that the PS output is meeting grid requirements, the controller may proceed to step 308 and enable a discharge mode of the PS and provision of power from the PS to the grid (e.g., by turning switches S1 and S2 ON and enabling current in a direction that provides power from the PS to the grid). The controller may, after a period of timeout has elapsed during S2G mode, return to step 306 to ensure that the PS power output is still compliant with grid requirements. In some cases, a separate control loop may concurrently and/or continuously (e.g., on a periodic basis) execute step 306 (and raise an alert if, at step 307, it is determined that the PS output is not meeting grid requirements).

Enablement of a discharge mode of the PS may be in accordance with a user profile associated with the PS and determined by the controller during authentication. For example, a user profile stored in memory (e.g., of the controller) may indicate that the PS should be discharged during certain hours of certain days but not others. In such an example, the controller may include or be connected to a clock that allows the controller to determine the current time of day, day of week, date, and/or year. As another example, a user profile may indicate that the PS should have at least 20% state of charge at a certain hour of the day, e.g., where the PS is an electrical vehicle used to drive to or from work at a particular hour. As another example, a user profile may indicate that the PS should be allowed to discharge via the GID only when state of charge of the PS is above a particular threshold level, or if a payment rate for providing power to the grid is above a certain level. The controller may account for user profile preferences when determining whether or not to take corrective action to enable discharge mode, and/or whether to provide power to local loads if discharge to the grid is not possible.

If, at step 307, the controller determines that the PS is outputting power that does not comply with grid requirements (despite being authenticated as recognized as being generally grid-compliant), the controller may proceed to step 309 and determine if corrective action may be taken. If corrective action is not possible, the controller may proceed to step 311. If corrective action is possible, the controller may proceed to step 310 and take corrective action. For example, the controller may command the PS (e.g., via the communication module 108) to adjust one or more operational parameters in order to meet one or more grid requirements. In some cases, the controller may independently take corrective action to provide a grid-compliant power at terminals 121, for example, by activating one or more of VAR compensator 109, THD filter 110, EMI filter 112 and/or export control module 111. After taking corrective action at step 310, the controller may return to step 306 and re-evaluate the output signal from the PS and determine, at step 307, if the output is now compatible with the grid requirements. After one or more unsuccessful attempts at corrective action (for example, after one or more attempts at corrective action, the power from the PS remains non-compliant with one or more grid requirements), the controller may determine that no further correction active is possible or likely to be successful, and may proceed to step 311, described above.

The steps of method 300 are provided as an example, and may be executed in a different order and/or may be modified (e.g. some steps may be adapted, combined, further subdivided, added, or removed) without departing from the scope of the disclosure herein.

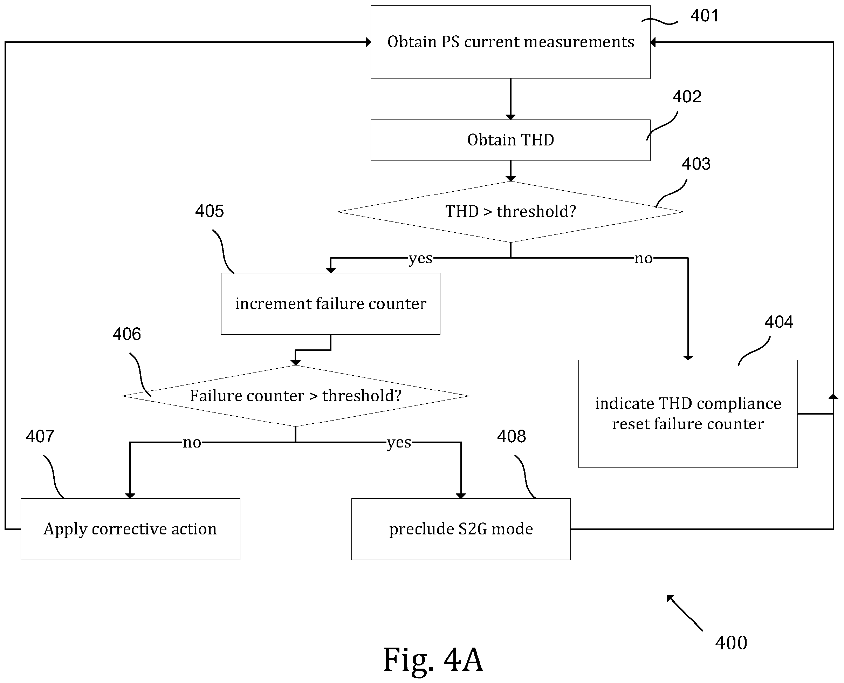

Reference is now made to Fig. 4A, which shows an example method 400 for operating a GID (e.g. GID 102 and/or GID 202) in accordance with features of the disclosure herein. Method 400 may be carried out as part of or concurrently with method 300, and may be carried out by a controller similar to or the same as the controller carrying out method 300. At step 401, the controller (e.g. controller 105 or 205) may obtain PS current measurements (e.g., provided by sensor(s)/sensor interface(s) 106), and at step 402 may calculate a THD of the PS output current. At step 403 the controller may compare the THD to a maximum THD threshold that is associated with a THD compliance requirement of the grid. If the THD is at or below the threshold, the controller may determine at step 404 that the PS is complying with a THD requirement and the THD requirement is not currently a reason to preclude the PS from providing (or continuing to provide) power to the grid. In cases where a failure counter is used, the controller may then reset the counter (e.g., to zero), since the PS is complying with the THD requirement. The controller may then, after a suitable timeout if desired (not explicitly shown) return to step 401 to ensure continued compliance.

If, at step 403, the controller determines that the THD of the power received from the PS is above the threshold, the controller may increment a failure counter. If, at step 406, it is determined that the number of failures indicated by the counter is above a threshold failure count, the controller may proceed to step 408 and indicate that S2G mode should not be enabled (or, if already enabled, should be disabled) due to lack of compliance with the THD requirement. In some cases, the threshold may be zero, i.e., a single failure results in preclusion of S2G mode. The controller may then, after a suitable timeout (not explicitly shown, and in some cases longer than a timeout following step 404) return to step 401 to re-evaluate compliance.

If the failure counter is below a threshold, the controller may, at step 407, take corrective action. For example, the controller may command the PS (e.g., via communication module 108) to modify a switching frequency, reduce a current, and/or adjust a control algorithm to reduce THD. As another example, the controller may activate a THD filter that is part of the GID. As another example, the controller may switch in and operate grid interface converter 218, which may be capable of providing THD-compliant power to the grid. After applying corrective action, the controller may, after a suitable timeout if desired, return to step 401 to re-evaluate compliance (e.g., check if the corrective action succeeded in reducing THD such that it is now below the maximum threshold THD for grid compliance).

The steps of method 400 are provided as an example, and may be executed in a different order and/or may be modified (e.g. some steps may be adapted, combined, further subdivided, added, or removed) without departing from the scope of the disclosure herein. For example, steps 401-403 may, in some cases, be implemented as part of step 306 of method 300. Steps 405-406 may be part of step 309. Step 407 may correspond to at least part of step 310, and step 408 may correspond to at least part of step 312 or step 314. Step 404 may correspond to at least part of step 308. Other combinations or variations may be considered as well.

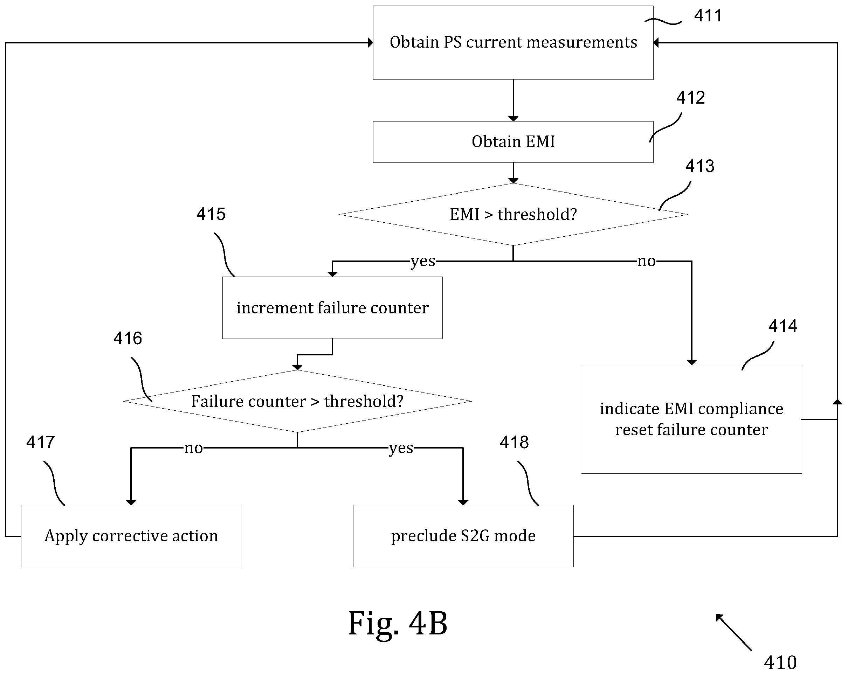

Reference is now made to Fig. 4B, which shows a method 410 for operating a GID (e.g. GID 102 and/or GID 202) in accordance with features of the disclosure herein. Method 410 may be carried out as part of or concurrently with methods 300 and/or 400, and may be carried out by a controller similar to or the same as the controller carrying out method 300. Method 410 may be similar to method 400, with a difference being that method 410 evaluates EMI compliance instead of THD compliance, such as by comparing measured EMI with an EMI threshold associated with the grid. Steps 411-418 may correspond to steps 401-408, respectively, with suitable differences in calculations performed and thresholds reflecting EMI evaluation and correction. Corrective action of step 417 may be, for example, commanding the PS to change a switching mechanism or switching frequency of a power converter that is part of the PS. For example, the controller may command the PS to implement a spread spectrum switching method when creating an output power signal. As another example, the controller may operate one or more switches to insert conductors that are twisted, braided, and/or surrounded by ferrite beads into a current path of PS 401. As another example, the controller may switch in and operate grid interface converter 218, which may be capable of providing EMI-compliant power to the grid.

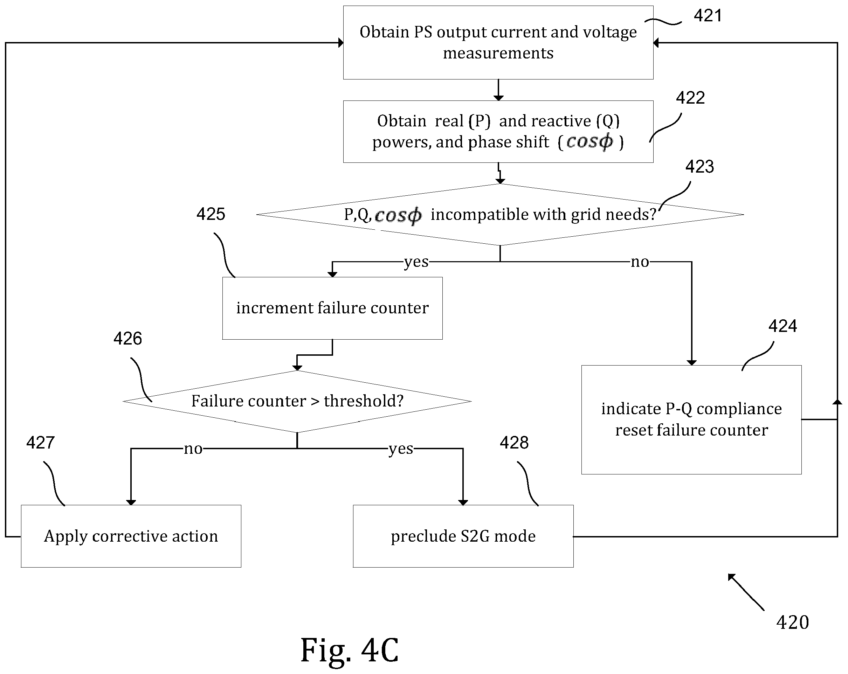

Reference is now made to Fig. 4C, which shows a method 420 for operating a GID (e.g. GID 102 and/or GID 202) in accordance with features of the disclosure herein. Method 420 may be carried out as part of or concurrently with methods 300, 400, and/or 410, and may be carried out by a controller similar to or the same as the controller carrying out method 300. Method 420 may be similar to method 400, with a difference being that method 410 evaluates reactive power (VAR, or Q) injection compliance instead of THD compliance. Steps 421-428 may correspond to steps 401-408, respectively, with suitable differences in calculations performed and thresholds reflecting VAR evaluation. For example, at step 422, the controller may calculate amplitudes, frequencies, a phase shift *φ* between voltage and current signals output by the PS, *cos φ,* real power (P), reactive power (VAR, or Q), and/or other parameters of the power output by the PS. At step 423, the controller may determine if the PS real and reactive powers and phase shift are in compliance with grid requirements of those parameters, such as by comparing these parameters with one or more threshold values of the parameters associated with the grid. In some cases, the controller may determine a measured VAR and compare it with a grid-required VAR based on measuring the grid voltage. In some cases, the controller may receive (via wired or wireless communication from a grid management device) a command indicating required P, Q and/or *cosφ* to be compliant with the grid. In some cases, the controller may determine a required P, Q and/or *cosφ* based on independent calculations by the GID controller.

At step 427, corrective action may include commanding the PS to increase or decrease P, Q, and/or *cosφ* to comply with grid regulations. For example, if more reactive power is required, Q can be increased via commanding the PS to modify a phase shift or amplitude of its output current. Additional corrective action may include operating switches (e.g. switches included in VAR compensator 109) to selectively connect one or more reactive loads (e.g. capacitors or inductors) such as at terminals 121 or 221 of GID 102 or 202. For example, one or more capacitors may be connected to terminals 121 or 221 to increase the reactive power supplied to the grid.

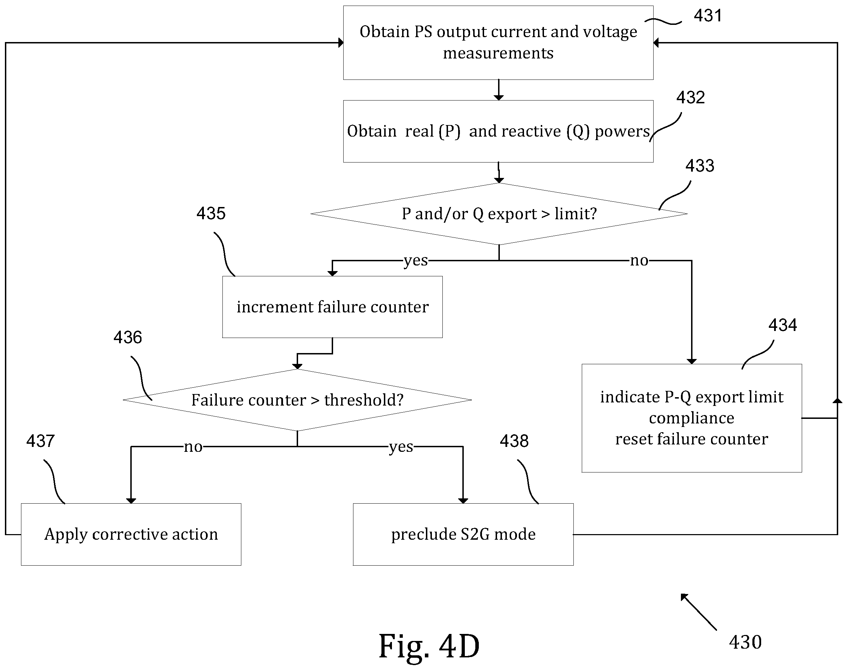

Reference is now made to Fig. 4D, which shows a method 430 for operating a GID (e.g. GID 102 and/or GID 202) in accordance with features of the disclosure herein. Method 430 may be carried out as part of or concurrently with methods 300, 400, 410, and/or 420, and may be carried out by a controller similar to or the same as the controller carrying out method 300. Method 430 may be similar to method 420, with a difference being that method 430 evaluates real and reactive power export limit compliance instead of power quality compliance.

Some grids may apply limits to an amount of power and/or energy the grid will "accept" from power sources connected via GID 102. For example, some grids couples to EV-chargers will not allow vehicles connected to the EV-chargers to export more power and/or energy than is imported at any given time, or at particular times of day. If a first GID 102 is coupled to a first EV operating in S2G mode (i.e., discharging power that GID 102 is providing to a grid) while a second GID is coupled to a second EV drawing power from the grid, balance may be achieved. If the second EV finishes charging, the first EV may be precluded from continuing to provide the same amount of power to the grid/ For example, the grid may communicate information associated with a power and/or energy limitation to the first GID, and in response the first GID may cause the first EV to reduce (or cease completely) the amount of power provided to the grid so that it does not exceed the energy limitation.

At step 432, the controller may measure active and reactive power provided by the PS, and at step 433 the controller may determine if the active and reactive power may be provided to the grid in compliance with grid requirements. Corrective action of step 437 may include the controller commanding the PS to reduce an output active or reactive power. Corrective action of step 437 may include the controller connecting one or more local active or reactive loads (e.g. loads 216 or storage device 214) to reduce power export to the grid without reducing power discharge from the PS.

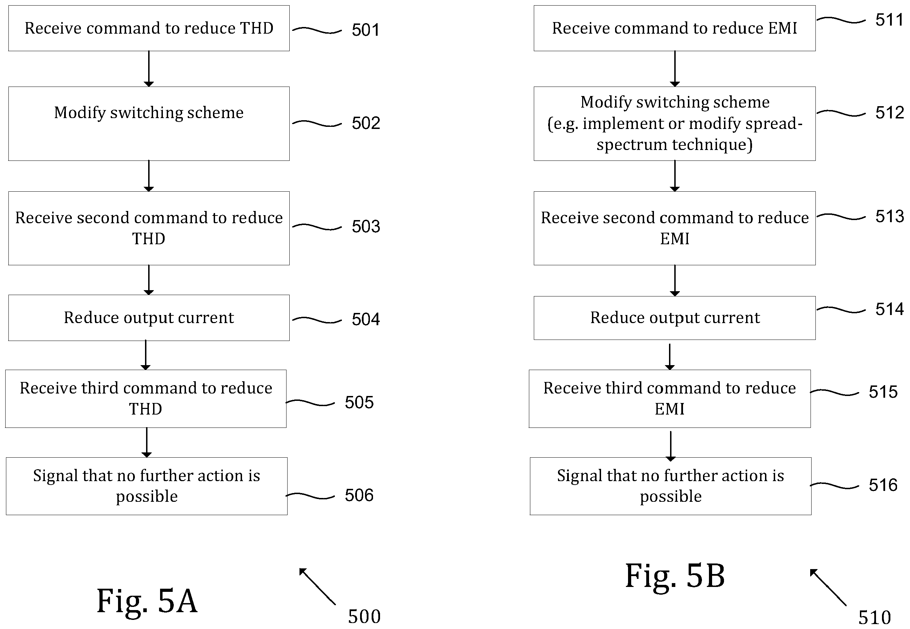

Reference is now made to Fig. 5A, which illustrates a method 500 that may be carried out by a power source controller (e.g., a controller that controls power source 101 or 201). At step 501, the controller may receive (e.g., via a communication device communicatively coupled to communication device 108) a first command from a GID controller to reduce a THD of a signal output by the power source. A GID controller may send such a command to a PS controller as part of, for example, step 407 of method 400, where a failure counter is zero. Responsive to the signal, the controller may, at step 502, adjust one or more characteristics of a switching scheme of a power source converter of the PS. For example, a switching frequency of the power source converter may be increased to reduce THD, and/or a different control algorithm designed to reduce THD may be used.

At step 503, the controller of the PS may receive a second command to further reduce THD. This may correspond to a second instance of step 407 of method 400, where the failure counter is one. In response, the controller may, at step 504, reduce current output by the PS. While reducing current does not always reduce THD, in some cases an allowable THD level may depend on current magnitude, and a lower current may enable compliance with a higher THD threshold requirement. At step 505, the controller of the PS may receive a third command to further reduce THD. This may correspond to a third instance of step 407 of method 400, where the failure counter is two. If the maximum allowable number of failures is reached and/or if the controller determines that no further corrective action (e.g., another modification of a switching scheme, or further reduction of current, or another action) is possible, the controller of the PS may signal the GID controller that no further action is possible. In some cases, the controller of the PS may ignore the third command, and eventually the GID controller will determine that no further PS-side corrective action is possible and preclude S2G mode at step 408.

Reference is now made to Fig. 5B, which illustrates a method 510 that may be carried out by a power source controller (e.g., a controller that controls power source 101 or 201). At step 511, the controller of the PS may receive (e.g., via a communication device communicatively coupled to communication device 108) a first command from a GID controller to reduce a EMI of a signal output by the power source. A GID controller may send such a signal to a PS controller as part of, for example, step 417 of method 410, where a failure counter is zero. Responsive to the signal, the controller may, at step 512 adjust one or more characteristics of a switching scheme of a power source converter of the PS. For example, the controller of the PS may begin varying a switching frequency of the power source converter (e.g., by use of a spread-spectrum method) to reduce EMI.

At step 513, the controller of the PS may receive a second command to further reduce THD. This may correspond to a second instance of step 417 of method 410, where the failure counter is one. In response, the controller of the PS may, at step 514, reduce current output by the PS. At step 515, the controller of the PS may receive a third command to further reduce EMI. This may correspond to a third instance of step 417 of method 400, where the failure counter is two. If the controller determines that no further corrective action (e.g., another modification of a switching scheme, or further reduction of current, or another action) is possible, the controller may signal the GID controller that no further action is possible. In some cases, the controller may ignore the third command, and eventually the GID controller will determine that no further PS-side corrective action is possible and preclude S2G mode at step 418.

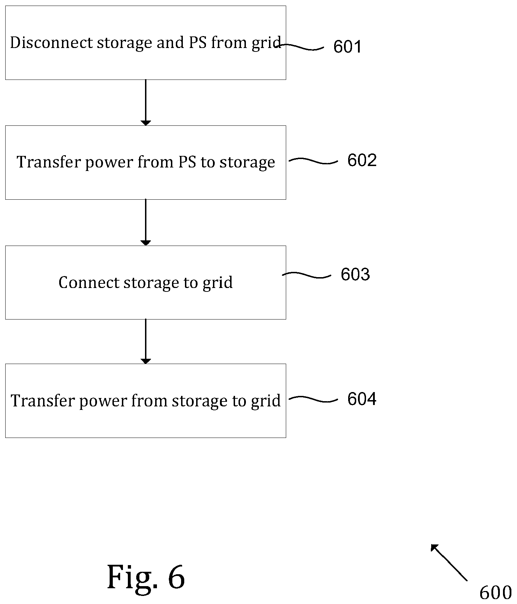

Reference is now made to Fig. 6, which illustrates a method 600 for enabling discharge of a power source (e.g. 201) when the PS is temporarily or permanently not capable of complying with grid requirements. Method 600 may allow a PS to send power to a power grid via a GID even without a grid-compliant built-in converter.

One or more control devices similar to or the same as controller 105 or 205 may carry out method 600. At step 601, the controller operates switches in order to disconnect the PS and a storage device (e.g. 214) from the grid (e.g. 203). For example, referring to Fig. 2B, controller 205 may cause switches S1, S2, S7, and S8 to be OFF and switches S5 and S6 to be ON. In some cases, switches S7 and S8 might not be included, and grid interface converter 218 may disconnect the power source from the grid by not operating. At step 602, the controller may cause power to be transferred from the PS to the storage device (e.g., via storage interface 215). Once power transfer is complete, at step 603, the controller may connect the storage device to the grid, e.g. by causing switches S7 and S8 to be ON, and at step 604, may operate converter 218 to convert power provided by storage device 214 to the grid.

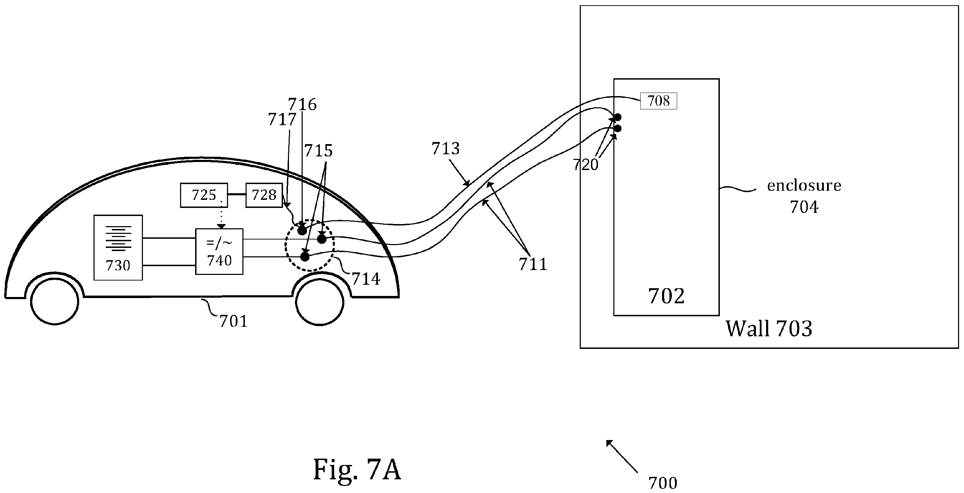

Reference is now made to Fig. 7A, which shows an example grid interface device 702 and a power source 701 as part of a system 700 in accordance with one or more features of the disclosure herein. GID 702 is shown having an enclosure 704 mounted on a wall 703. Wall 703 may be, for example, a wall of a house, office building or other structure. In some cases, enclosure 704 may be mounted on a base connected to earth and not a wall.

GID 702 may be the same as or similar to GIDs 102 and 202 as disclosed herein. GID 702 may include communication device 708 (which may be the same as or similar to communication devices 108 and 208) and terminals 720.

Power source 701 is, in the example system 700, an electric vehicle comprising a battery 730. Battery 730 may be coupled to DC/AC converter 740, with DC/AC converter 740 configured to convert DC power from battery 730 and provide AC power to power terminals 715, or to convert AC power from power terminals 715 to DC power provided to battery 730. PS 701 may further comprise communication device 728 that is, in this example, a wired communication device coupled via communication wire 717 to communication terminal 716.

Communication device 728 may be coupled to controller 725, and may provide messages and/or commands received (e.g., from communication device 708) to controller 725, and/or may transmit messages and/or commands based on instructions from controller 725. Controller 725 may be configured to control DC/AC converter 740 based at least in part on communications received via communication device 728. Controller 725 may include one or more digital and/or analog controllers such as digital signal processors (DSPs), other processors, microcontroller units (MCUs), field programmable gate arrays (FPGAs), and/or various analog and/or digital control circuits. Controller 725 may be, or may be part of, a computing device having one or more processors that may execute computer-executed instructions stored in memory (such as memory of controller 725. When the instructions are executed by the one or more processors, this may cause power source 701 to perform any of the various functions and actions described herein that are attributed to power source 701.

Communication device 708 may, in this example, be coupled to communication terminal 716 via communication wire 713. Terminals 720 may be coupled to power terminals 715 via power conductors 711, which are designed to carry power from PS 701 to GID 702 and/or vice-versa. Where GID 702 is GID 102 or GID 202, terminals 720 may correspond to terminals 120 or 220. In some cases, power conductors 711 and communication wire 713 may be enclosed together by a common sheathing (not explicitly shown), forming a multi-wire cable. In some cases, communication wire 713 might not be needed, and wired communication signals may be superimposed by communication devices 708 and 728 on power conductors 711. In some cases, communication device 728 may be a wireless communication device configured to communicate wirelessly with communication device 708.

Power terminals 715 and/or communication terminal 716 may be provided via a multi-connector outlet 714, configured to temporarily receive a plug having corresponding terminals for connecting to power terminals 715 and/or communication terminal 716, the plug being coupled to power conductors 711 and/or communication wire 713. Communication wire 713 may be used to transmit commands, data, and/or other information between GID 702 and power source 701, such as the identifying information sent by the power source to the GID in authentication step 304 and/or any of the commands that may be sent by the GID to the power source for causing the power source to modify its power output and/or to indicate a mode. Power conductors 711 are, in this example, shown to be comprising two conductors, suitable for carrying single-phase AC power or DC power. In some cases, power conductors 711 may comprise three or more power conductors. For example, if GID 702 provides three-phase AC power and/or PS 701 is configured to receive and/or provide three-phase AC power, power conductors 711 may comprise three power conductors or three power conductors and a fourth neutral conductor. For example, if GID 702 provides split-phase AC power and/or PS 701 is configured to receive and/or provide split-phase AC power, power conductors 711 may comprise two power conductors and a third neutral conductor. If GID 702 provides DC power and/or PS 701 is configured to receive and/or provide DC power, power conductors 711 may comprise two power conductors, with one designated a positive conductor and one designated a negative conductor.

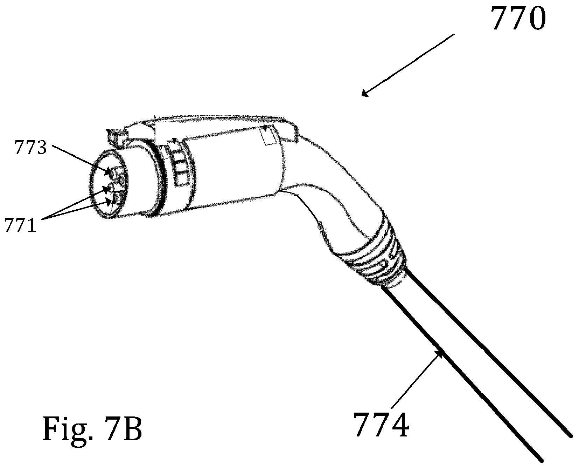

Reference is now made to Fig. 7B, which illustrates features of system 700 according to one or more aspects of the disclosure herein. Cable 774 may extend from GID 702 on a first end (not shown) and be attached to plug connector 770 on a second end. Cable 774 may comprise a sheathing encompassing multiple wires and/or conductors (e.g. power conductors 711 and/or communication wire 713 of Fig. 7A). Plug connector 770 may be designed to fit into an outlet 714 of PS 701. Plug 770 may be designed to fit into outlets of many different types of power sources, for example, if various power sources are designed to have standard outlet shapes. Plug 770 may comprise multiple pins configured to connect with terminals of a PS. For example, pins 771 may be configured to connect to power terminals 711 of Fig. 7A when plug connector 770 is connected to outlet 714. Communication pin 773 may be configured to connect to communication terminal 713 of Fig. 7A when plug connector 770 is connected to outlet 714.

Various aspects will be highlighted in a set of numbered clauses herein. These aspects are not to be interpreted as being limiting of the invention or inventive concept, but are provided merely to highlight some features as described herein, without suggesting a particular order of importance or relevancy of such aspects.

Clause 1. An apparatus comprising:
a first connection configured to transfer power with a power grid;
a second connection configured to communicate data with a power source;
one or more sensors configured to measure one or more parameters of the power grid;
one or more processors; and
memory storing instructions that, when executed by the one or more processors, causes the apparatus to:
   determine, based on the one or more parameters of the power grid measured by the one or more sensors, a control mode of the power source; and
   send, via the second connection and to the power source, an indication of the control mode.

Clause 2. The apparatus of clause 1, wherein the control mode is selected from a plurality of control modes comprising:
a first control mode associated with the power source sending power via the apparatus; and
a second control mode associated with the power source receiving power from the power grid via the apparatus.

Clause 3. The apparatus of clause 2, wherein the first control mode is associated with the power source sending power to the power grid.

Clause 4. The apparatus of any of clauses1-3, wherein the power source comprises an electric vehicle.

Clause 5. The apparatus of any of clauses 1-4, wherein the power source comprises a battery.

Clause 6. The apparatus of any of clauses 1-5, further comprising one or more switches, wherein the instructions, when executed by the one or more processors, cause the apparatus to:
based on the control mode, operate the one or more switches to electrically connect the power source with the first connection; and
transfer power via the one or more switches between the power grid and the power source.

Clause 7. The apparatus of any of clauses 1-6, wherein the instructions, when executed by the one or more processors, cause the apparatus to:
based on the control mode being a first control mode, transfer power from the power source to the power grid; and
based on the control mode being a second control mode, transfer power from the power grid to the power source.

Clause 8. The apparatus of any of clauses 1-7, wherein the instructions, when executed by the one or more processors, configure the apparatus to send, based on at least one parameter of the one or more parameters, a current control command to the power source via the second connection.

Clause 9. The apparatus of any of clauses 1-8, wherein the instructions, when executed by the one or more processors, configure the apparatus to send, based on at least one parameter of the one or more parameters, a voltage control command to the power source via the second connection.

Clause 10. The apparatus of any of clauses 1-9, wherein the instructions, when executed by the one or more processors, configure the apparatus to send, based on at least one parameter of the one or more parameters, an active power control command to the power source via the second connection.

Clause 11. The apparatus of any of clauses 1-10, wherein the instructions, when executed by the one or more processors, configure the apparatus to send, based on at least one parameter of the one or more parameters, a reactive power control command to the power source via the second connection.

Clause 12. The apparatus of any of clauses 1-11, wherein the instructions, when executed by the one or more processors, configure the apparatus to send, based on at least one parameter of the one or more parameters, a shutdown command to the power source via the second connection.

Clause 13. The apparatus of any of clauses 1-12, wherein the second connection comprises a wired communication interface.

Clause 14. The apparatus of any of clauses 1-13, wherein the second connection comprises a wireless communication interface.

Clause 15. The apparatus of any of clauses 1-14, wherein the power source comprises a power converter, and wherein the instructions, when executed by the one or more processors, cause the apparatus to send at least one command to the power source, based on at least one parameter of the one or more parameters and via the second connection, that is configured to cause control of the power converter.

Clause 16. The apparatus of any of clauses 1-15, wherein the at least one command is configured to cause control of the power converter to output power in compliance with at least one power grid code requirement.

Clause 17. The apparatus of clause 15 or clause 16, wherein the at least one command comprises one or more of an active power production command, a reactive power production command, a shutdown command, a current production command, or a voltage production command.

Clause 18. The apparatus of any of clauses 1-17, wherein the apparatus further comprises an internet connection, and wherein the instructions, when executed by the one or more processors, causes the apparatus to communicate with a server via the internet connection.

Clause 19. The apparatus of clause 18, wherein the instructions, when executed by the one or more processors, causes the apparatus to download a software update from the server.

Clause 20. The apparatus of clause 19, wherein the software update comprises at least one of an update to the instructions stored in the memory or an update associated with the one or more parameters.

Clause 21. The apparatus of any of clauses 1-20, wherein the instructions, when executed by the one or more processors, cause the apparatus to, based on a determination that the power source is capable of complying with one or more grid export requirements, enable the power source to provide power to the power grid via the first connection.

Clause 22. The apparatus of any of clauses 1-21, wherein the instructions, when executed by the one or more processors, cause the apparatus to, based on a determination that the power source is at least temporarily not in compliance with one or more grid code export requirements, enable the power source to draw power from to the power grid and prevent the power source from providing power to the power grid.

Clause 23. The apparatus of any of clauses 1-22, further comprising a housing that is physically attached to earth in a fixed manner.

Clause 24. The apparatus of any of clauses 1-23, wherein the power grid comprises an alternating current (AC) grid and the first connection is configured to transfer AC power with the power grid.

Clause 25. The apparatus of any of clauses 1-23, wherein the power grid comprises a direct current (DC) grid and the first connection is configured to transfer DC power with the power grid.

Clause 26. The apparatus of any of clauses 1-25, wherein the instructions, when executed by the one or more processors, cause the apparatus to determine the control mode further based on one or both of a geographical location of the apparatus or a geographical location of the power source.

Clause 27. The apparatus of any of clauses 1-26, wherein the instructions, when executed by the one or more processors, cause the apparatus to determine the control mode based on a comparison of the one or more parameters with one or more threshold values.

Clause 28. The apparatus of any of clauses 1-27, wherein the instructions, when executed by the one or more processors, cause the apparatus to determine, based on the data, a characteristic of the power source, and to determine the control mode further based on the characteristic of the power source.

Clause 29. The apparatus of any of clauses 1-28, wherein the instructions, when executed by the one or more processors, cause the apparatus to determine, based on the data, a user profile associated with the power source, and to determine the control mode further based on the user profile.

Clause 30. The apparatus of any of clauses 1-29, wherein the power source comprises a battery, and wherein the instructions, when executed by the one or more processors, cause the apparatus to determine, based on the data, a state of charge of the battery, and to determine the control mode further based on the state of charge of the battery.

Clause 31. The apparatus of any of clauses 1-30, wherein the power source comprises a power converter, and wherein the instructions, when executed by the one or more processors, cause the apparatus to determine, based on the data, a characteristic of the power converter, and to determine the control mode further based on the characteristic of the power converter.

Clause 32. A system comprising:
the apparatus of any of clauses 1-31; and
the power source.

Clause 33. The system of clause 32, wherein the power source is an electrical vehicle comprising a battery and a bidirectional onboard charger.

Clause 34. A method comprising:
operating the apparatus of any of clauses 1-31.

Clause 35. A method comprising:
establishing a communication link between a device and a power source;
determining, based on data received via the communication link, a characteristic of the power source;
determining, based on the characteristic of the power source, an ability of the power source to provide power compliance with one or more grid regulations; and
based on determining that the power source is able to provide power in compliance with the one or more grid regulations, enabling transfer of power from the power source to a power grid via the device.

Clause 36. The method of clause 35, further comprising based on failing to determine an ability of the power source to provide power in compliance with the one or more grid regulations, prohibiting transfer of power from the power source to the power grid.

Clause 37. The method of any of clauses 35-36, further comprising enabling transfer of power from the power grid to the power source via the device.

Clause 38. The method of any of clauses 35-37, further comprising sending, by the device to the power source and based on a measurement of the power transferred from the power source, at least one of an active power production command, a reactive power production command, a shutdown command, a current production command, or a voltage production command.

Clause 39. The method of any of clauses 35-38, further comprising sending, by the device to the power source, a command to increase or decrease production of active power.

Clause 40. The method of any of clauses 35-39, further comprising sending, by the device to the power source a command to increase or decrease at least one of a magnitude, a phase or a frequency of voltage.

Clause 41. The method of any of clauses 35-40, further comprising sending, by the device to the power source, a command to increase or decrease at least one of a magnitude, a phase or a frequency of current.

Clause 42. The method of any of clauses 35-41, wherein the enabling the transfer of power comprises changing a state of one or more switches of the device to provide an electrical path for the power from the power source to pass to the power grid.

Clause 43. An apparatus comprising:
one or more processors; and
memory storing instructions that, when executed by the one or more processors, cause the apparatus to perform the method of any of clauses 35-42.

Clause 44. A non-transitory computer-readable medium storing instructions that, when executed, cause an apparatus to perform the method of any of clauses 35-42.

Clause 45. A system comprising:
an apparatus comprising:
   one or more processors; and
   memory storing instructions that, when executed by the one or more processors, cause the apparatus to perform the method of any of clauses 35-42; and
the power source.

Clause 46. A method comprising:
authenticating that a power source is capable of providing power in compliance with one or more power grid requirements;
receiving a first command from a grid interface device;
based on the first command, sending power to a power grid via the grid interface device;
while sending the power, receiving a second command from the grid interface device; and
based on the second command, modifying the power being sent to the power grid.

Clause 47. The method of clause 46, further comprising:
stopping sending the power to the power grid via the grid interface device; and
after the stopping, receiving, by the power source, power from the power grid via the grid interface device.

Clause 48. The method of clause 46 or clause 47, wherein the power source comprises a battery.

Clause 49. The method of any of clauses 46-48, wherein the power source comprises an electric vehicle.

Clause 50. A power source comprising:
one or more processors; and
memory storing instructions that, when executed by the one or more processors, cause the power source to perform the method of any of clauses 46-49.

Clause 51. A non-transitory computer-readable medium storing instructions that, when executed, cause a power source to perform the method of any of clauses 46-49.

Clause 52. A system comprising:
a power source comprising:
   one or more processors; and
   memory storing instructions that, when executed by the one or more processors, cause the power source to perform the method of any of clauses 46-49; and
the grid interface device.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting. The claims follow hereafter.

## Claims

1. A method comprising:
establishing a communication link between a device and a power source;
determining, based on data received via the communication link, a characteristic of the power source;
determining, based on the characteristic of the power source, an ability of the power source to provide power compliance with one or more grid regulations; and
based on determining that the power source is able to provide power in compliance with the one or more grid regulations, enabling transfer of power from the power source to a power grid via the device.

2. The method of claim 1, further comprising based on failing to determine an ability of the power source to provide power in compliance with the one or more grid regulations, prohibiting transfer of power from the power source to the power grid.

3. The method of any one of the preceding claims, further comprising enabling transfer of power from the power grid to the power source via the device.

4. The method of any one of the preceding claims, further comprising sending, by the device to the power source and based on a measurement of the power transferred from the power source, at least one of an active power production command, a reactive power production command, a shutdown command, a current production command, or a voltage production command.

5. The method of any one of the preceding claims, further comprising sending, by the device to the power source, a command to increase or decrease production of active power.

6. The method of any one of the preceding claims, further comprising sending, by the device to the power source a command to increase or decrease at least one of a magnitude, a phase or a frequency of voltage.

7. The method of any one of the preceding claims, further comprising sending, by the device to the power source, a command to increase or decrease at least one of a magnitude, a phase or a frequency of current.

8. The method of any one of the preceding claims, wherein the enabling the transfer of power comprises changing a state of one or more switches of the device to provide an electrical path for the power from the power source to pass to the power grid.

9. The method of any one of the preceding claims, further comprising:
determining, based on one or more parameters of the power grid measured by one or more sensors, a control mode of the power source; and
sending, to the power source, an indication of the control mode.

10. The method of the preceding claim, wherein the determining the control mode comprises selecting the control mode from a plurality of control modes comprising:
a first control mode associated with the power source sending power to the power grid via the device; and
a second control mode associated with the power source receiving power from the power grid via the device.

11. The method of any one of the preceding claims, wherein the power source comprises at least one or an electric vehicle or a battery.

12. The method of any one of the preceding claims, wherein the power source comprises a power converter, and wherein the method further comprises sending at least one command to the power source, based on at least one measured parameter of the power grid, that is configured to cause control of the power converter.

13. An apparatus comprising:
one or more processors; and
memory storing instructions that, when executed by the one or more processors, cause the apparatus to perform the method of any one of claims 1-12.

14. A computer-readable medium storing instructions that, when executed, cause an apparatus to perform the method of any one of claims 1-12.

15. A system comprising:
an apparatus comprising:
one or more processors; and
memory storing instructions that, when executed by the one or more processors, cause the apparatus to perform the method of any one of claims 1-12; and
the power source.
